# EUROPÄISCHE PATENTSCHRIFT

(11) **EP 3 191 324 B1**
(45) Veröffentlichungstag und Bekanntmachung des Hinweises auf die Patenterteilung: **24.02.2021**
(21) Anmeldenummer: 15763283.7
(22) Anmeldetag: 08.09.2015
(51) Int. Cl.: B60G 7/00, B60G 9/00

(54) **ACHSEINHEIT**
AXLE UNIT
UNITÉ D'ESSIEU

(30) Priorität: 12.09.2014 DE 102014218325
(43) Veröffentlichungstag der Anmeldung: 19.07.2017
(73) Patentinhaber: SAF-HOLLAND GmbH, 63856 Bessenbach (DE)
(72) Erfinder: GALAZIN, Gregory, Muskegon, Michigan 49445 (US)
(74) Vertreter: Müller Schupfner & Partner Patent- und Rechtsanwaltspartnerschaft mbB
(86) Internationale Anmeldenummer: PCT/EP2015/070481
(87) Internationale Veröffentlichungsnummer: WO 2016/038027

(56) Entgegenhaltungen:
- WO-A1-00/01548
- WO-A2-03/064192
- GB-A- 2 396 140
- US-A1- 2006 033 304
- US-A1- 2008 029 988

## Beschreibung

Die vorliegende Erfindung betrifft eine Achseinheit insbesondere zum Einsatz in Nutzfahrzeugen.

Achseinheiten sind aus dem Stand der Technik insofern bekannt, dass ein Achsrohr, welches oft eine starre Achse ist, über eine Lenkeranordnung gefedert bzw. gedämpft am Rahmen des Nutzfahrzeuges gelagert bzw. festgelegt ist, wobei am Achsrohr wiederum ein oder eine Vielzahl von Fahrzeugrädern drehbar gelagert ist. Der Verbindungsbereich zwischen Achsrohr und dem Längslenker ist dabei ein besonders hoch belasteter und insbesondere auf periodische Lastwechsel belasteter Abschnitt der Fahrwerksaufhängung des Nutzfahrzeuges. Es hat in der Vergangenheit viele Versuche gegeben, den Verbindungsbereich zwischen Längslenker und Achsrohr an diese hohen Belastungen anzupassen. Dabei wurden aus dem Stand der Technik viele Achseinheiten bekannt, bei welchen eine Überdimensionierung und somit ein sehr hohes Gewicht der Achseinheit als Konsequenz der Auslegung mit höherer Sicherheit gegen Ermüdungsbrüche oder ähnliche Schädigungen des Verbindungsbereiches zwischen Achseinheit und Lenkereinheit in Kauf genommen werden muss. Es besteht somit ein Verbesserungsbedarf im Bereich der Verbindung zwischen dem Längslenker und dem Achsrohr einer Nutzfahrzeugradaufhängung, um insbesondere das Gewicht der Achseinheit zu reduzieren und gleichzeitig ausreichende Festigkeitswerte und eine einfache Herstellung zu ermöglichen.

Die GB 2 396 140 A zeigt ein Lenkerelement zur Festlegung an einem Achsrohr, wobei das Lenkerelement einen halbkreisförmig geöffneten Aufnahmebereich aufweist, in welchem das Lenkerelement mit dem Achsrohr zusammengefügt und verschweißt werden kann.

Die WO 03/064192 A2 offenbart ein Lenkerelement, welches auf ein Achsrohr aufgesetzt und über Lochschweißungen an dem Achsrohr festgeschweißt werden kann.

Die WO 00/01548 A1 offenbart ein aus mehreren Blechen zusammenschweißbares Lenkerelement, welches auf ein Achsrohr aufsetzbar und entlang verschiedener Schweißkanten mit dem Achsrohr verschweißbar ist.

Die US 2008/00299888 A1 und die US 2006/0033304 A1 offenbaren ein Lenkerelement, welches seitlich an eine Achse angesetzt werden kann und mit einer halbkreisförmigen Eingriffsgeometrie an der Achse gehalten und im Bereich dieser Haltegeometrie an der Achse festschweißbar ist.

Die WO 2009/035520 A1 offenbart gemäß dem Oberbegriff des Anspruchs 1 ein Längslenkersystem für Nutzfahrzeuge, bei dem ein Lenkerelement an einem Achsrohr festgeschweißt wird, wobei das Lenkerelement das Achsrohr mit einem Winkel kleiner 180° umgreift.

Aufgabe der vorliegenden Erfindung ist die Bereitstellung einer Achseinheit, welche einfach hergestellt werden kann und dabei besonders hohe Festigkeitswerte des Verbindungsbereiches zwischen einem Achsrohr und einem Lenkerelement erreicht und dabei auch ein geringes Bauteilgewicht aufweist.

Diese Aufgabe wird gelöst mit einer Achseinheit gemäß Anspruch 1. Weitere Vorteile und Merkmale der vorliegenden Erfindung ergeben sich aus den abhängigen Ansprüchen.

Erfindungsgemäß umfasst die Achseinheit ein Achsrohr und ein Lenkerelement, wobei das Achsrohr sich im Wesentlichen längs bzw. entlang einer Rohrachse erstreckt, wobei das Lenkerelement einen als Aussparung ausgebildeten ersten Fügebereich aufweist, wobei das Lenkerelement mit seinem ersten Fügebereich an das Achsrohr angrenzend und im Wesentlichen quer zur Rohrachse angeordnet ist, wobei im ersten Fügebereich ein Schweißabschnitt zwischen dem Lenkerelement und dem Achsrohr herstellbar ist. Das Achsrohr ist bevorzugt die starre Achse eines Nutzfahrzeuges, an deren distalen Enden die Räder des Nutzfahrzeuges drehbar gelagert sind. Das Lenkerelement ist bevorzugt der Längslenker eines Nutzfahrzeuges oder ein Teil eines solchen Längslenkers, wobei das Lenkerelement vorzugsweise an einem ersten Ende schwenkbar am Rahmen des Nutzfahrzeuges gelagert ist. Vorzugsweise an seinem dem ersten Ende gegenüberliegenden Ende ist das Lenkerelement mit dem Achsrohr verbunden. Zur Verbindung mit dem Achsrohr weist das Lenkerelement einen als Aussparung ausgebildeten Fügebereich auf. Als Aussparung wird im vorliegenden Fall bevorzugt eine Öffnung im Lenkerelement bezeichnet entlang deren Innenkante eine Schweißnaht zwischen dem Lenkerelement und dem Achsrohr herstellbar ist. Mit anderen Worten ist der Fügebereich als "Auge" ausgebildet. Durch die bevorzugte Festlegung des Lenkerelements am Achsrohr im Bereich des ersten Fügebereiches können insbesondere bevorzugt die Materialspannungen im Bereich der Verbindung zwischen Lenkerelement und Achsrohr minimiert werden, da der als Aussparung ausgebildete erste Fügebereich eine besonders gute Kraft- und Momentenübertragung zwischen dem Achsrohr und dem Lenkerelement ermöglicht. Der im Fügebereich herstellbarer Schweißabschnitt ist vorzugsweise eine Schweißnaht, welche sich zum Teil aus dem Material des Achsrohres, dem Material des Lenkerelements und einem während eines Schweißvorganges zusätzlich hinzugefügten Zusatzschweißwerkstoff zusammensetzt. Der Schweißabschnitt ist somit bevorzugt der Materialbereich zwischen dem Achsrohr und dem Lenkerelement, über welchen Kräfte und Momente zwischen dem Achsrohr und dem Lenkerelement übertragen werden.

Erfindungsgemäß sind das Achsrohr und das Lenkerelement ausschließlich im ersten Fügebereich aneinander festgelegt. Dies bedeutet mit anderen Worten das vorzugsweise keine stoffschlüssigen und/oder kraftschlüssigen und/oder formschlüssigen Verbindungen zwischen dem Achsrohr und dem Lenkerelement außerhalb des ersten Fügebereiches vorgesehen sind. Der Vorteil dieser Ausführungsform ist, dass die Herstellung der Achseinheit besonders einfach ist, da lediglich im ersten Fügebereich eine Schweißverbindung zwischen dem Achsrohr und dem Lenkerelement hergestellt werden muss, welche allen Anforderungen an die Festigkeit der Verbindung zwischen dem Achsrohr und dem Lenkerelement entspricht.

Erfindungsgemäß weist das Achsrohr eine Druckhälfte und eine Zughälfte auf, wobei der Schweißabschnitt ausschließlich in der Druckhälfte des Achsrohres vorgesehen ist. Die Druckhälfte des Achsrohres ist bevorzugt der Bereich des Achsrohres der im Betrieb der Achseinheit, bei einer Biegebeanspruchung vorwiegend auf Druckspannung beansprucht wird. Erfindungsgemäß ist die Druckhälfte des Achsrohres diejenige Hälfte, welche sich im Wesentlichen auf der Oberseite des Achsrohres, bezogen auf die Anordnung des Achsrohres im Raum in seinem eingebauten Zustand an der Achseinheit, befindet. Die Zughälfte des Achsrohres ist vorzugsweise die der Druckhälfte gegenüberliegende Hälfte des Achsrohres. In der Zughälfte wird das Achsrohr bevorzugt überwiegend auf Zugspannung beansprucht. Im Rahmen der vorliegenden Erfindung hat es sich als vorteilhaft herausgestellt, die Schweißverbindung zwischen dem Lenkerelement und dem Achsrohr an der Druckhälfte des Achsrohres anzuordnen. Auf diese Weise kann die Lebensdauer der Verbindung zwischen Lenkerelement und Achsrohr signifikant gesteigert werden, da die Achseinheit im Bereich der Schweißverbindung zwischen Lenkerelement und Achsrohr im Wesentlichen ausschließlich auf Druckspannung beansprucht wird. Die das Achsrohr verformenden Kräfte, welche eine Druck- und eine Zughälfte am Achsrohr verursachen, sind vorzugsweise die an der Außenseite bzw. am distalen Ende des Achsrohres angreifende Stützkraft der Räder des Nutzfahrzeuges, sowie die durch das Lenkerelement auf das Achsrohr übertragener Gewichtskraft des Nutzfahrzeuges. Vorzugsweise ist somit die Druckhälfte des Achsrohres auf der der Schwerkraft entgegen gerichteten Seite des Achsrohres angeordnet. Mit besonderem Vorteil ist der Schweißabschnitt im Wesentlichen in der zur Schwenkachse des Lenkerelements hin gewandten Hälfte der Druckhälfte des Achsrohres angeordnet. Bevorzugt ist der Schweißabschnitt mit zumindest 80 Prozent seiner Erstreckung und besonders bevorzugt vollständig in der zur Schwenkachse hin weisenden Hälfte des Achsrohres am Lenkerelement angeordnet. Es kann auf diese Weise die hohe Dauerfestigkeit der Verbindung von Achsrohr und Lenkerelement durch Verschweißen in der Druckhälfte mit einer guten Montierbarkeit der Achseinheit kombiniert werden. Insbesondere bleibt durch Anordnung des Schweißabschnitts an der zur Schwenkachse gewandten Seite der Bereich des Lenkerelements frei, an dem weitere Elemente der Achseinheit, wie ein Tragelement, festgelegt werden können.

Insbesondere bevorzugt ist in der Zughälfte des Achsrohres keine Schweißverbindung zwischen dem Achsrohr und dem Lenkerelement vorgesehen. Vorzugsweise ist die Achseinheit lediglich in der Druckhälfte des Achsrohres mit einer Schweißverbindung zwischen Achsrohr und Lenkerelement versehen. Es kann auf diese Weise verhindert werden, dass aufgrund einer Zugbeanspruchung im Bereich der Schweißverbindung zwischen Achsrohr und Lenkerelement, bzw. im Bereich des Schweißabschnitts, Materialschäden durch lokale Rissausbildung auftreten und als Folge die Lebensdauer der Verbindung zwischen Lenkerelement und Achsrohr sinkt. Mit Vorteil ist der Schweißabschnitt des Lenkerelements derart dimensioniert und angeordnet, dass er nicht in die Zughälfte des Achsrohres hineinragt.

In einer besonders bevorzugten Ausführungsform erstreckt sich der Schweißabschnitt maximal über einen Schweißbogenwinkel bezogen auf die Rohrachse, wobei der Schweißbogenwinkel kleiner als 120°, vorzugsweise kleiner als 100° und besonders bevorzugt kleiner als 90° ist. Der Schweißbogenwinkel ist vorzugsweise der Winkel der zwischen einem Punkt auf der Rohrachse und zwei Geraden, welche sich jeweils von der Rohrachse zu je einem Ende des Schweißabschnitts in einer senkrecht zur Rohrachse verlaufenden Schnittebene erstrecken. Die Schnittebene verläuft dabei vorzugsweise durch den Bereich des Schweißabschnitts in welchem dieser einen maximalen Bogenwinkel aufgespannt. Dabei ist der Schweißabschnitt vorzugsweise elliptisch ausgebildet. In alternativem Ausführungsformen kann der Schweißabschnitt auch im Wesentlichen rechteckig ausgebildet sein, wobei bevorzugt gerundete Kanten des Rechtecks vorgesehen sind. Es hat sich im Rahmen der vorliegenden Erfindung gezeigt dass bei einem Schweißbogenwinkel kleiner 120° stets eine ausreichende Festigkeit der Verbindung zwischen dem Lenkerelement und dem Achsrohr erreichbar ist. Dabei kann, um eine ausreichende Länge der Schweißnaht im Schweißabschnitt zu erreichen, der Schweißabschnitt eine größere Erstreckung längs oder parallel zur Rohrachse aufweisen als parallel zu einem Umfang, oder einer Kreisbahn um die Rohrachse. In dem bevorzugten Fall, dass der Schweißbogenwinkel kleiner als 100° ist, ist besonders bevorzugt eine optimale Anordnung des Schweißabschnitts in der Druckhälfte des Achsrohres möglich. Ein Schweißbogenwinkel von kleiner als 90° weist den Vorteil auf, dass der Bereich in welchem das Achsrohr durch die Herstellung einer Schweißverbindung geschwächt ist, möglichst minimal ist und trotzdem eine ausreichende Festigkeit durch eine ausreichende Länge der Schweißnaht des ersten Schweißabschnitts erreichbar ist.

Erfindungsgemäß umgreift das Lenkerelement das Achsrohr mit einem Lenkerbogenwinkel bezogen auf die Rohrachse, wobei der Lenkerbogenwinkel erfindungsgemäß kleiner als 180° ist. Der Lenkerbogenwinkel ist mit anderen Worten der Winkel, mit welchem das Lenkerelement mit einem Aufnahmebereich, vorzugsweise umfassend den Fügebereich und an diesen angrenzende Bereiche, das Achsrohr umfasst. Dabei ist das Lenkerelement vorzugsweise nicht im gesamten Bereich der Umfassung des Achsrohres mit dem Achsrohr verschweißt. Bevorzugt ist also der Schweißbogenwinkel kleiner als der Lenkerbogenwinkel. Im bevorzugten Fall, dass der Lenkerbogenwinkel kleiner als 180°, oder genau 180° ist, kann das Achsrohr seitlich, mit anderen Worten quer zur Rohrachse, in den Aufnahmebereich, welcher auch den Fügebereich umfasst, eingesetzt werden. Auf diese Weise können mit Vorteil bereits weitere Anbausysteme am Achsrohr festgelegt sein bevor die Verbindung mit dem Lenkerelement hergestellt wird, wobei das Achsrohr nicht durch den Aufnahmebereich hindurch geschoben werden muss.

Mit Vorteil ist der Lenkerbogenwinkel ein 1,05-bis 2,5-faches, vorzugsweise ein 1,2-bis 2-faches und besonders bevorzugt ein 1,6-bis 1,8-faches des Schweißbogenwinkels. Das Größenverhältnis zwischen dem Lenkerbogenwinkel und dem Schweißbogenwinkel ist ein Ausdruck dafür, in welcher Größenordnung das Lenkerelement das Achsrohr außerhalb der Schweißverbindung im Schweißabschnitt umgreift. Dabei dienen die Bereiche außerhalb des ersten Schweißabschnitts insbesondere bevorzugt der Übertragung der Gewichtskraft des Nutzfahrzeuges auf das Achsrohr. Im Rahmen der vorliegenden Erfindung ist es besonders bevorzugt, dass das Lenkerelement mit dem Achsrohr nicht im gesamten Bereich der Kraftübertragung verschweißt ist, sondern die Schweißverbindung nur in einem bestimmten Abschnitt des Kontaktbereiches zwischen Lenkerelement und Achsrohr hergestellt wird. Auf diese Weise können Materialschädigungen und Materialschwächung im Kontaktbereich zwischen Achsrohr und Lenkerelement minimiert werden. Im Rahmen der vorliegenden Erfindung ist es daher bevorzugt, dass das Verhältnis des Lenkerbogenwinkels zum Schweißbogenwinkel einen Wert von 1,05 nicht unterschreitet. Die Obergrenze des Wertebereiches von 2,5 ist dabei bevorzugt für Fahrwerksysteme einzusetzen, bei welchen im Wesentlichen auf die Verbindung zwischen Lenkerelement und Achsrohr wirkende Druckkräfte erwartet werden, wobei diese Druckkräfte auch außerhalb des Schweißabschnitts übertragen werden können. Der besonders bevorzugte Bereich von 1,6-1,8 hat sich dabei insbesondere für hoch belastete Nutzfahrzeuge bewährt, wobei ein optimaler Kompromiss aus der Möglichkeit hohe Maximalkräfte und Biegemomente zu übertragen und einer ausreichenden Lebensdauer der Verbindung zwischen Achsrohr und Lenkerelement aufgrund der vergleichsweise geringen Materialschwächung durch das Herstellen einer Schweißverbindung.

Bevorzugt ist der erste Fügebereich als zweckmäßigerweise umfänglich geschlossene Aussparung an dem Lenkerelement ausgebildet, wobei der Schweißabschnitt eine umlaufende Fläche an dem ersten Fügebereich aufweist. Mit anderen Worten ist der erste Fügebereich somit vorzugsweise als Aussparung ausgebildet, durch welche hindurch der Kontaktbereich zwischen dem Lenkerelement und dem Achsrohr zugänglich ist, so dass eine Schweißnaht im ersten Schweißabschnitt herstellbar ist. Der Schweißabschnitt weist dabei vorzugsweise eine umlaufende Fläche auf. Als umlaufende Fläche wird dabei vorzugsweise die nach innen gerichtete Fläche des als Aussparung ausgebildeten Fügebereichs definiert. Besonders bevorzugt ist die umlaufende Fläche dabei ringförmig und gekrümmt ausgebildet, wobei die Krümmung quer zu der ringförmigen Bahn verläuft.

Besonders bevorzugt weist die umlaufende Fläche eine mittlere Länge auf welche in einem Verhältnis von 0,4-1,3 vorzugsweise 0,6-1 und besonders bevorzugt von ca. 0,85-0,95 zum Umfang des Achsrohres im Bereich des ersten Fügebereiches steht. Die Variation der mittleren Länge der umlaufenden Fläche des Schweißabschnittes und eine Möglichkeit, die tatsächlich Verbindungslänge, das heißt mit anderen Worten die Länge, entlang derer eine Schweißnaht zwischen dem Achsrohr und dem Lenkerelement hergestellt ist, zu beeinflussen. Als mittlere Länge wird in diesem Zusammenhang die Erstreckung der umlaufenden Fläche gemessen in der Mitte zwischen dem Achsrohr und dem Lenkerelement, definiert. Es hat sich dabei gezeigt, dass im Rahmen eines Verhältnisses von 0,4 bis 1,3 ein günstiger Kompromiss zwischen einer verbleibenden Restwandstärke der Lenkereinheit außerhalb des Schweißabschnittes und einer andererseits ausreichend hohen Verbindungslänge bzw. Schweißnahtlänge zwischen Lenkerelement und Achsrohr gegeben ist. Das bevorzugte Verhältnis von 0,6 bis 1 erlaubt dabei, dass bei einer bevorzugten leicht elliptischen Ausbildung des Schweißabschnittes eine mittlere Länge der umlaufenden Fläche erreicht wird, die im Wesentlichen größer als oder gleich dem Umfang des Achsrohres ist, wodurch bei Auslegung der Achseinheit vorzugsweise lediglich eine Skalierung vorgenommen werden muss und stets das entsprechend vorteilhafte Verhältnis zwischen der Kantenlänge des Schweißabschnitts und der Dicke bzw. dem Umfang des Achsrohres gewählt werden kann.

Ferner bevorzugt ist der erste Fügebereich derart am Lenkerelement vorgesehen, dass angrenzend an den ersten Fügebereich und einander im Wesentlichen gegenüberliegend zwei Lenkerstege gebildet sind, wobei die Lenkerstege vorzugsweise jeweils eine minimale Stegbreite aufweisen, wobei der erste Fügebereich vorzugsweise eine maximale Ausschnittserstreckung parallel zur Rohrachse aufweist, wobei vorzugsweise die Summe der minimalen Stegbreiten zu der Ausschnittserstreckung in einem Verhältnis von 0,1 bis 1, vorzugsweise 0,2 bis 0,8 und besonders bevorzugt von ca. 0,3 bis 0,5 steht. Die an den Fügebereich angrenzenden Stegbereiche weisen vorzugsweise eine größere Erstreckung quer zur Lenkerachse, oder zur Rohrachse auf als ihre Stegbreite. Hierdurch bilden die Lenkerstege eine bevorzugte Materialverstärkung des Lenkerelements im Bereich des Fügebereiches, welche die durch die Aussparung des Fügebereichs verursachte Materialschwächung ausgleicht. Um einen guten Kompromiss zwischen ausreichender Materialstärke des Lenkerelements und einer gleichzeitig ausreichenden Kantenlänge, entlang derer der Fügebereich an dem Achsrohr festlegbar ist, zu erreichen, ist es bevorzugt, dass die Ausschnittserstreckung in einem bestimmten Verhältnis zur Erstreckung der Stegbreite steht. Vorzugsweise weisen die Lenkerstege eine Stegbreite auf, deren Minimalwert kleiner ist als die Erstreckung des Schweißabschnitts längs bzw. parallel der Lenkachse oder der Rohrachse. Die minimale Stegbreite ist vorzugsweise der kleinste Betrag der Materialstärke des Lenkerelements im Bereich der Aussparung des ersten Fügebereiches. Bevorzugt wird dabei die minimale Stegbreite zwischen der Außenseite des Lenkerelements und dem Rand der Aussparung gemessen. Das Lenkerelement weist somit im Bereich der minimalen Stegbreite eine Materialschwächung auf, deren negative Auswirkung auf die Festigkeit des Lenkerelements gering gehalten werden kann, indem das Verhältnis der Summe der minimalen Stegbreiten zur Aussparungserstreckung einen Wert von 0,1 nicht unterschreitet. Der bevorzugte Verhältnisbereich von 0,1-1 der Summe der minimalen Stegbreiten zur Ausschnittserstreckung sorgt dabei für einen besonders guten Kompromiss zwischen einer ausreichenden Kantenlänge zur Schweißung des Lenkerelements an das Achsrohr und einer weiterhin ausreichenden Festigkeit des Lenkerelements gegen Verbiegung. Es kann auf diese Weise ein besonders guter Kompromiss zwischen der Festigkeit der Schweißverbindung zwischen Lenkerelement und Achsrohr und der Festigkeit des Lenkerelements selbst gefunden werden. Der besonders bevorzugte Bereich von 0,2-0,8 hat sich dabei insbesondere für Achssysteme bewährt, in welchen eine besonders kompakte Bauweise der Lenkerelement-Achsrohr-Verbindung erforderlich ist. Der insbesondere bevorzugte Verhältnisbereich von 0,3-0,4 erreichte nach Versuchen der Anmelderin die besten Werte für die Festigkeit des Lenkerelements zum einen und die Festigkeit der Schweißverbindung zwischen Lenkerelement und Achsrohr zum anderen.

In einer besonders bevorzugten Ausführungsform ist das Lenkerelement als einstückiges Gussteil ausgebildet. Durch die Herstellung des Lenkerelements mittels eines Gießverfahrens lässt sich insbesondere die Fertigungsdauer und die Anzahl der zur Herstellung erforderlichen Verfahrensschritte reduzieren. Darüber hinaus kann durch das Gießen ein besonders gleichmäßiges Gefüge des Lenkerelements erreicht werden, welches besonders hohe Festigkeitswerte erzielt.

Besonders bevorzugt ist zur Festlegung eines Federelements an der Achseinheit ein Tragelement vorgesehen, wobei das Tragelement über einen zweiten Fügebereich an dem Achsrohr festlegbar, bevorzugt festgelegt, ist, und wobei der zweite Fügebereich bevorzugt als Aussparung an dem Tragelement ausgebildet ist. Besonders bevorzugt ist der zweite Fügebereich, ähnlich dem ersten Fügebereich, als Aussparung ausgebildet, wodurch sich auf einfache Weise eine umlaufende Schweißnaht zwischen dem Tragelement und dem Achsrohr herstellen lässt. Insbesondere bevorzugt kann dabei das Tragelement auch einen Fügebereich aufweisen, an welchem eine stoffschlüssige Verbindung zum Lenkerelement herstellbar ist.

Insbesondere bevorzugt ist das Tragelement ausschließlich im zweiten Fügebereich an dem Achsrohr festgelegt. Um die Materialbeeinträchtigung am Achsrohr möglichst gering zu halten, ist es bevorzugt, den Festlegungsbereich, oder mit anderen Worten die Schweißzone, zwischen dem Tragelement und dem Achsrohr auf den zweiten Fügebereich zu beschränken. Besonders bevorzugt sind also das Lenkerelement und das Tragelement jeweils über einen als Aussparung ausgebildeten Fügebereich am Achsrohr festgelegt. Dabei kann zur Unterstützung der Festigkeit der Achseinheit zusätzlich noch eine Schweißverbindung zwischen dem Tragelement und dem Lenkerelement hergestellt sein.

Weitere Vorteile und bevorzugte Merkmale der vorliegenden Erfindung ergeben sich der nachfolgenden Beschreibung mit Bezug auf die beigefügten Figuren. Es versteht sich dass einzelne, in ausgewählten Figuren gezeigte Merkmale auch in Ausführungsformen anderer Figuren zum Einsatz gelangen können, sofern dies nicht explizit ausgeschlossen worden oder sich aufgrund technischer Überlegungen verbietet.

Es zeigen:
- Fig. 1: eine teilweise geschnittene Seitenansicht einer bevorzugten Ausführungsform der erfindungsgemäßen Achseinheit,
- Fig. 2: eine Detailansicht einer erfindungsgemäßen Ausführungsform der erfindungsgemäßen Achseinheit, und
- Fig. 3: eine Draufsicht einer bevorzugten Ausführungsform der erfindungsgemäßen Achseinheit.

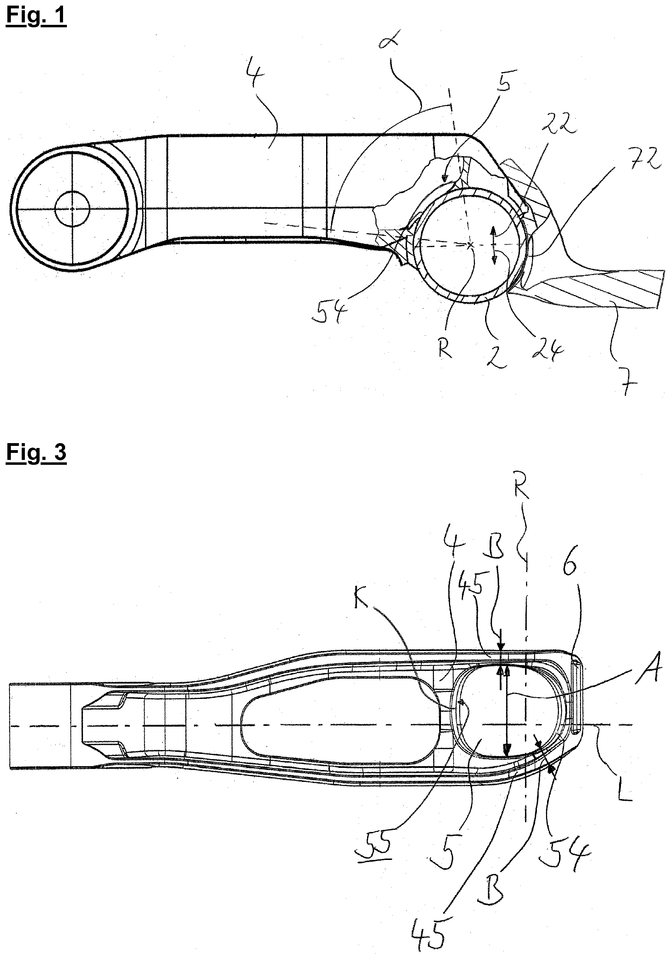

Fig. 1 zeigt eine teilweise geschnittene Seitenansicht einer bevorzugten Ausführungsform der erfindungsgemäßen Achseinheit. Dabei ist insbesondere der erste Fügebereich 5, das Achsrohr 2 und das bevorzugt vorgesehene Tragelement 7 geschnitten dargestellt. Über dem ersten Fügebereich 5 ist das Lenkerelement 4 mittels einer Schweißverbindung an dem Achsrohr 2 festgelegt. Der im ersten Fügebereich 5 vorgesehene Schweißabschnitt 54 erstreckt sich dabei vorzugsweise mit einem Schweißbogenwinkel α bezogen auf die Rohrachse R. Weiterhin bevorzugt erstreckt sich der Schweißabschnitt 54 lediglich in der Druckhälfte 22 des Achsrohres 2, während in der Zughälfte 24 des Achsrohres 2 keine Schweißverbindung zwischen dem Lenkerelement 4 und dem Achsrohr 2 besteht. Das Tragelement 7 weist vorzugsweise einen zweiten Fügebereich 72 auf, in welchem es an dem Achsrohr 2 festgelegt ist.

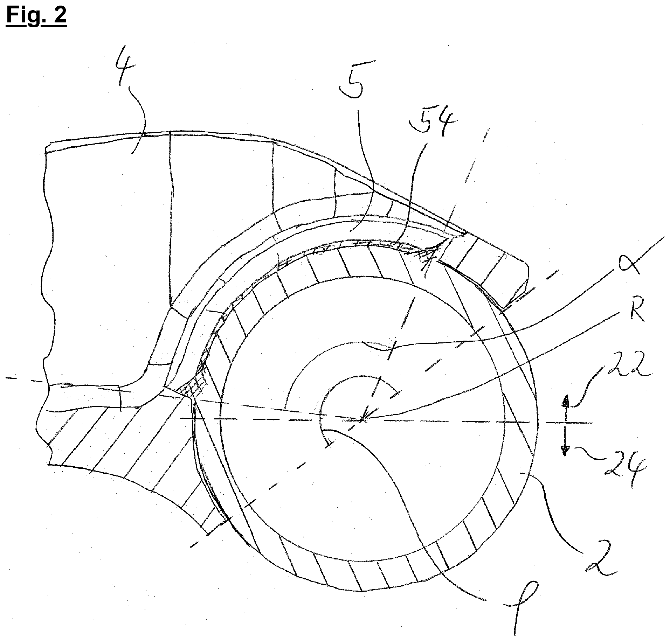

Figur 2 zeigt eine Detailansicht des bereits in Figur 1 gezeigten ersten Fügebereiches 5, wobei sich der Schweißabschnitt 54 vorzugsweise über einen Schweißbogenwinkel α bezogen auf die Rohrachse R erstreckt. Erfindungsgemäß umschlingt das Lenkerelement 4 das Achsrohr 2 mit einem Lenkerbogenwinkel ϕ, welcher kleiner als 180° ist. Weiterhin bevorzugt ist der Lenkerbogenwinkel ϕ deutlich größer als der Schweißbogenwinkel a. Indem das Lenkerelement 4 das Achsrohr 2 mit einem Lenkerbogenwinkel ϕ umfasst, welcher deutlich größer als der Schweißbogenwinkel α ist, steht eine vorzugsweise sehr große Kraftübertragungsfläche zur Übertragung von Gewichts- und Haltekräften an das Achsrohr 2 zur Verfügung. Weiterhin wird durch die bevorzugte Beschränkung der Ausdehnung der Schweißnaht, bzw. des Schweißabschnitts 54, auf die Druckhälfte 22 des Achsrohres 2 das Auftreten von Zugspannungen im Bereich der Schweißverbindung zwischen Lenkerelement 4 und Achsrohr 2 vermieden, wodurch die Lebensdauer signifikant erhöht werden kann. Bevorzugt weist der Schweißbogenwinkel α einen Wert von ca. 105° auf.

Figur 3 zeigt eine Draufsicht auf eine bevorzugte Ausführungsform des erfindungsgemäßen Lenkerelements 4. Dabei ist die bevorzugte im Wesentlichen ovale und vorzugsweise von der Kreisform zumindest bereichsweise abweichende Geometrie des ersten Fügebereiches 5 verdeutlicht. Vorzugsweise an der linken Seite des Lenkerelements 4 ist der Bereich der schwenkbaren Aufhängung des Lenkerelements 4 am Rahmen eines Nutzfahrzeuges vorgesehen. In diesem Bereich erstreckt sich das Lenkerelement 4 vorzugsweise ebenensymmetrisch zu einer Lenkermittenebene L. Weiterhin ist verdeutlicht, dass ein Halteabschnitt 6, zur Vereinfachung der Montage eines Tragelements 7 (nicht gezeigt, siehe Fig. 1) außermittig zur Lenkermittenebene ausgerichtet ist. Weiterhin ist in Figur 3 der Schweißabschnitt 54 des Lenkerelements 4 dargestellt, welcher als Aussparung ausgebildet ist und entlang dessen Innenfläche eine Schweißverbindung mit einem Achsrohr 2 (nicht gezeigt) herstellbar ist. Die umlaufende Fläche 55 des Schweißabschnitts 54 weist vorzugsweise eine mittlere Länge K auf, die in einem Verhältnis zum Umfang des Achsrohres steht. Weiterhin zeigt Figur 3 das bevorzugte Merkmal der Achseinheit, wonach das Lenkerelement 4 im Fügeabschnitt 5 einen ersten Lenkersteg 45 und einen zweiten Lenkersteg 45 aufweist. Die Lenkerstege 45 weisen eine minimale Stegbreite B auf, wobei der Schweißabschnitt 54 parallel zur Rohrachse R eine Ausschnittserstreckung A aufweist, welche in einem bestimmten Verhältnis zur Summe der Stegbreiten B steht. Die Stegbreite B wird dabei vorzugsweisein der, in Figur 3 gezeigten Draufsicht auf das Lenkerelement 4 gemessen. Vorzugsweise sind die Stegbreiten B kleiner als die Ausschnitterstreckung A. Im vorliegenden Beispiel ist die Summe der beiden Stegbreiten B ungefähr das 0,3- bis 0,5-fache der Ausschnitterstreckung A.

### Bezugszeichen:

- 2: - Achsrohr
- 4: - Lenkerelement
- 45: - Lenkersteg
- 5: - erster Fügebereich
- 54: - Schweißabschnitt
- 55: - umlaufende Fläche
- 6: - Halteabschnitt
- 7: - Tragelement
- 72: - zweiter Fügebereich
- A: - Ausschnittserstreckung
- B: - Stegbreite
- K: - mittlere Länge
- L: - Lenkermittenachse
- R: - Rohrachse
- α: - Schweißbogenwinkel
- ϕ: - Lenkerbogenwinkel

## Patentansprüche

1. Achseinheit umfassend ein Achsrohr (2) und ein Lenkerelement (4),
wobei das Achsrohr (2) sich im Wesentlichen längs einer Rohrachse (R) erstreckt,
wobei das Lenkerelement (4) einen als Aussparung ausgebildeten ersten Fügebereich (5) aufweist,
wobei das Lenkerelement (4) mit seinem ersten Fügebereich (5) an das Achsrohr (2) angrenzend und im Wesentlichen quer zur Rohrachse (R) angeordnet ist,
wobei im ersten Fügebereich (5) ein Schweißabschnitt (54) zwischen dem Lenkerelement (4) und dem Achsrohr (2) herstellbar ist,
wobei das Lenkerelement (4) das Achsrohr (2) mit einem Lenkerbogenwinkel (ϕ) bezogen auf die Rohrachse (R) umgreift,
wobei der Lenkerbogenwinkel (ϕ) kleiner als 180° ist,
wobei das Achsrohr (2) und das Lenkerelement (4) ausschließlich im ersten Fügebereich (5) aneinander festgelegt sind,
wobei das Achsrohr (2) eine Druckhälfte (22) und eine Zughälfte (24) aufweist,
wobei die Druckhälfte (22) des Achsrohres (2) diejenige Hälfte ist, welche sich im Wesentlichen auf der Oberseite des Achsrohres (2), bezogen auf die Anordnung des Achsrohres (2) im Raum in seinem eingebauten Zustand an der Achseinheit, befindet,
**dadurch gekennzeichnet, dass**
der Schweißabschnitt (54) ausschließlich in der Druckhälfte (22) des Achsrohres (2) vorgesehen ist.

2. Achseinheit nach Anspruch 1,
wobei in der Zughälfte (24) des Achsrohres (2) keine Schweißverbindung zwischen dem Achsrohr (2) und dem Lenkerelement (4) besteht.

3. Achseinheit nach einem der vorhergehenden Ansprüche,
wobei der Schweißabschnitt (54) sich maximal über einen Schweißbogenwinkel (α) bezogen auf die Rohrachse (R) erstreckt,
wobei der Schweißbogenwinkel (α) kleiner als 120°, vorzugsweise kleiner als 100° und besonders bevorzugt kleiner als 90° ist.

4. Achseinheit nach Anspruch 3,
wobei der Lenkerbogenwinkel (ϕ) ein 1,05- bis 2,5-faches, vorzugsweise ein 1,2- bis 2-faches und besonders bevorzugt ein 1,6- bis 1,8-faches des Schweißbogenwinkels (α) ist.

5. Achseinheit nach einem der vorhergehenden Ansprüche,
wobei der erste Fügebereich (5) als Aussparung an dem Lenkerelement (4) ausgebildet ist,
wobei der Schweißabschnitt (54) eine umlaufende Fläche (55) an dem ersten Fügebereich (5) aufweist.

6. Achseinheit nach Anspruch 5,
wobei die umlaufende Fläche (55) eine mittlere Länge (K) aufweist, welche in einem Verhältnis von 0,4 bis 1,3, vorzugsweise 0,6 bis 1 und besonders bevorzugt von ca. 0,85 bis 0,95 zum Umfang des Achsrohres (2) im Bereich des ersten Fügebereiches (5) steht.

7. Achseinheit nach einem der vorhergehenden Ansprüche,
wobei das Lenkerelement (4) an den ersten Fügebereich (5) angrenzend zwei, einander im Wesentlichen gegenüberliegende Lenkerstege (45) aufweist,
wobei die Lenkerstege (45) jeweils eine minimale Stegbreite (B) aufweisen, wobei der erste Fügebereich (5) eine maximale Ausschnittserstreckung (A) parallel zur Rohrachse (R) aufweist,
wobei die Summe der minimalen Stegbreiten (B) zu der Ausschnittserstreckung (A) in einem Verhältnis von 0,1 bis 1, vorzugsweise 0,2 bis 0,8 und besonders bevorzugt von ca. 0,3 bis 0,5 steht.

8. Achseinheit nach einem der vorhergehenden Ansprüche,
wobei das das Lenkerelement (4) als einstückiges Gussteil ausgebildet ist.

9. Achseinheit nach einem der vorhergehenden Ansprüche,
wobei ein Tragelement (7) zur Festlegung eines Federelements an der Achseinheit vorgesehen ist,
wobei das Tragelement (7) über einen zweiten Fügebereich (72) an dem Achsrohr (2) festlegbar ist, und
wobei der zweite Fügebereich (72) vorzugsweise als Aussparung an dem Tragelement (7) ausgebildet ist.

10. Achseinheit nach Anspruch 9,
wobei das Tragelement (7) ausschließlich im zweiten Fügebereich (72) an dem Achsrohr (2) festgelegt ist.

## Claims

1. An axle unit comprising an axle tube (2) and a suspension arm element (4), wherein the axle tube (2) extends substantially along a tube axis (R), wherein the suspension arm element (4) has a first joining region (5) configured as a recess,
wherein the suspension arm element (4) is arranged with its first joining region (5) adjacent to the axle tube (2) and substantially transverse to the tube axis (R),
wherein a weld portion (54) between the suspension arm element (4) and the axle tube (2) can be produced in the first joining region (5),
wherein the suspension arm element (4) surrounds the axle tube (2) with a suspension arm arc angle (ϕ) relative to the tube axis (R),
wherein the suspension arm arc angle (ϕ) is less than 180°,
wherein the axle tube (2) and the suspension arm element (4) are secured to each other exclusively in the first joining region (5),
wherein the axle tube (2) has a pressure half (22) and a traction half (24), wherein the pressure half (22) of the axle tube (2) is the half which is situated substantially on the top side of the axle tube (2) in relation to the spatial arrangement of the axle tube in its state fitted on the axle unit,
**characterized by** the weld portion (54) is provided exclusively in the pressure half (22) of the axle tube (2).

2. The axle unit as claimed in claim 1, wherein no weld connection between the axle tube (2) and the suspension arm element (4) exists in the traction half (24) of the axle tube (2).

3. The axle unit as claimed in any of the preceding claims, wherein the weld portion (54) extends maximally over a weld arc angle (α) relative to the tube axis (R), wherein the weld arc angle (α) is less than 120°, preferably less than 100°, and particularly preferably less than 90°.

4. The axle unit as claimed in claim 3, wherein the suspension arm arc angle (ϕ) is 1.05 to 2.5 times, preferably 1.2 to 2 times, and particularly preferably 1.6 to 1.8 times the weld arc angle (α).

5. The axle unit as claimed in any of the preceding claims, wherein the first joining region (5) is configured as a recess on the suspension arm element (4), wherein the weld portion (54) has a peripheral face (55) on the first joining region (5).

6. The axle unit as claimed in claim 5, wherein the peripheral face (55) has a central length (K) which stands in a ratio from 0.4 to 1.3, preferably 0.6 to 1, and particularly preferably approximately 0.85 to 0.95 to the circumference of the axle tube (2) in the region of the first joining region (5).

7. The axle unit as claimed in any of the preceding claims, wherein the suspension arm element (4) adjacent to the joining region (5) has two suspension arm webs (45) substantially opposite each other,
wherein the suspension arm webs (45) each have a minimum web width (B), wherein the first joining region (5) has a maximum cutout extension (A) parallel to the tube axis (R),
wherein the sum of the minimum web widths (B) to the cutout extension (A) stands in a ratio from 0.1 to 1, preferably 0.2 to 0.8, and particularly preferably approximately 0.3 to 0.5.

8. The axle unit as claimed in any of the preceding claims, wherein the suspension arm element (4) is formed as an integral casting.

9. The axle unit as claimed in any of the preceding claims, wherein a carrier element (7) is provided for securing a spring element to the axle unit,
wherein the carrier element (7) can be secured to the axle tube (2) via a second joining region (72), and
wherein the second joining region (72) is preferably configured as a recess on the carrier element (7).

10. The axle unit as claimed in claim 9, wherein the carrier unit (7) is secured to the axle tube (2) exclusively in the second joining region (72).

## Revendications

1. Ensemble d'essieu comprenant un tube d'essieu (2) et un élément formant bras oscillant (4),
dans lequel
le tube d'essieu (2) s'étend sensiblement le long d'un axe de tube (R), l'élément formant bras oscillant (4) présente une première zone de jonction (5) réalisée sous forme d'échancrure,
l'élément formant bras oscillant (4) est disposé avec sa première zone de jonction (5) adjacente au tube d'essieu (2) et sensiblement transversalement à l'axe de tube (R),
dans la première zone de jonction (5), une portion de soudage (54) peut être réalisée entre l'élément formant bras oscillant (4) et le tube d'essieu (2),
l'élément formant bras oscillant (4) entoure le tube d'essieu (2) avec un angle d'arc de bras (ϕ) par rapport à l'axe de tube (R),
l'angle d'arc de bras (ϕ) est inférieur à 180°,
le tube d'essieu (2) et l'élément formant bras oscillant (4) sont fixés l'un à l'autre exclusivement dans la première zone de jonction (5),
le tube d'essieu (2) comprend une moitié sous compression (22) et une moitié sous traction (24),
la moitié sous compression (22) du tube d'essieu (2) est cette moitié qui se situe sensiblement sur la face supérieure du tube d'essieu (2) par rapport à la disposition du tube d'essieu (2) dans l'espace, dans son état monté sur l'ensemble d'essieu,
**caractérisé en ce que**
la portion de soudage (54) est prévue exclusivement dans la moitié sous compression (22) du tube d'essieu (2).

2. Ensemble d'essieu selon la revendication 1,
dans lequel dans la moitié sous traction (24) du tube d'essieu (2) il n'y a pas de liaison soudée entre le tube d'essieu (2) et l'élément formant bras oscillant (4).

3. Ensemble d'essieu selon l'une des revendications précédentes,
dans lequel la portion de soudage (54) s'étend au maximum sur un angle d'arc de soudage (α) par rapport à l'axe de tube (R), et
l'angle d'arc de soudage (α) est inférieur à 120°, de préférence inférieur à 100° et de manière particulièrement préférée inférieur à 90°.

4. Ensemble d'essieu selon l'une des revendications précédentes,
dans lequel l'angle d'arc de bras (ϕ) est de 1,05 à 2,5 fois, de préférence de 1,2 à 2 fois et de manière particulièrement préférée de 1,6 à 1,8 fois l'angle d'arc de soudage (α).

5. Ensemble d'essieu selon l'une des revendications précédentes,
dans lequel la première zone de jonction (5) est réalisée sous forme d'échancrure sur l'élément formant bras oscillant (4),
la portion de soudage (54) présente une surface circonférentielle (55) au niveau de la première zone de jonction (5).

6. Ensemble d'essieu selon la revendication 5,
dans lequel la surface circonférentielle (55) présente une longueur moyenne (K) qui se situe dans un rapport de 0,4 à 1,3, de préférence de 0,6 à 1 et de manière particulièrement préférée d'environ 0,85 à 0,95 fois la circonférence du tube d'essieu (2) au niveau de la première zone de jonction (5).

7. Ensemble d'essieu selon l'une des revendications précédentes,
dans lequel l'élément formant bras oscillant (4) comporte deux barrettes de bras (45) sensiblement opposées l'une à l'autre, adjacentes à la première zone de jonction (5),
les barrettes de bras (45) présentent chacune une largeur de barrette minimale (B), la première zone de jonction (5) présente une extension de découpe maximale (A) parallèle à l'axe de tube (R),
la somme des largeurs de barrette minimales (B) par rapport à l'extension de découpe (A) est dans un rapport de 0,1 à 1, de préférence de 0,2 à 0,8 et de manière particulièrement préférée d'environ 0,3 à 0,5.

8. Ensemble d'essieu selon l'une des revendications précédentes,
dans lequel l'élément formant bras oscillant (4) est réalisé sous forme de pièce moulée d'un seul tenant.

9. Ensemble d'essieu selon l'une des revendications précédentes,
dans lequel un élément de support (7) est prévu pour immobiliser un élément de ressort à l'ensemble d'essieu,
l'élément de support (7) peut être immobilisé au tube d'essieu (2) par l'intermédiaire d'une deuxième zone de jonction (72), et
la deuxième zone de jonction (72) est de préférence réalisée sous forme d'échancrure sur l'élément de support (7).

10. Ensemble d'essieu selon la revendication 9,
dans lequel l'élément de support (7) est immobilisé au tube d'essieu (2) exclusivement dans la deuxième zone de jonction (72).
